# EUROPEAN PATENT SPECIFICATION

(11) **EP 0 681 108 B1**
(45) Date of publication and mention of the grant of the patent: **24.05.2000**
(21) Application number: 95105889.0
(22) Date of filing: 20.04.1995
(51) Int. Cl.: F16B 11/00

(54) **Method for adhesive connection and member therefor**
Methode für klebende Verbindung und Einrichtung dafür
Méthode pour connection adhésive et élément pour l'achever

(30) Priority: 02.05.1994 IT TO940350
(43) Date of publication of application: 08.11.1995
(73) Proprietor: FIAT AUTO S.p.A., 10135 Torino (IT)
(72) Inventor: DA RE', Mario, I-10128 Torino (IT)
(74) Representative: Cian, Paolo

(56) References cited:
- EP-A- 0 194 020
- WO-A-89/11401
- GB-A- 2 253 455

## Description

The present invention relates to a method for the adhesive connection of elements of a structure the axes of which intersect one another, according to the pre-characterising portion of appended claim 1. Such a method is known by EP-A-0 194 020.

In particular, reference is made here to a structure composed of a plurality of elongate elements connected together at nodal points such as, for example, a vehicle framework.

In the conventional technique, in order to connect together elements which are to be adhesively connected an adhesive is interposed between the elements and they are held together until polymerisation of the adhesive is achieved.

However, the connection achieved in this conventional technique often does not provide a satisfactory strength, especially if the elements to be connected together are of different materials or of the same material of a particular type. This happens, for example, with light structures in which sections, especially box section elements of various materials, are normally used and it is often necessary to connect together materials such as aluminium/aluminium, aluminium/plastics material, plastics material/plastics material, plastics material/ ferrous material, or aluminium/ferrous material where the term "plastics material" also includes any composite material with a matrix of plastics resin.

The principal object of the present invention is that of providing a method for connecting together elements of a structure by adhesive, which makes it possible to obtain an improved connection strength with respect to the connection strength which can be obtained using previously known systems.

This object is achieved thanks to the features set forth in claim 1.

Thanks to these characteristics the method according to the invention makes it possible to obtain a significantly improved adhesive connection strength, in particular thanks to the use of the intermediate connection member by which it is possible to obtain an improvement in the connection strength of up to 30-40% greater than that obtainable by utilising conventional techniques.

The subject of the present invention are also a connection member for the adhesive connection of elements of a structure and a structure, having respectively the features indicated in claims 6 and 10. WO 89/11401 discloses a connection member having recesses in opposite surfaces.

Further characteristics and advantages of the present invention will become clearly apparent from the following detailed description made with reference to the attached drawings, provided purely by way of non-limitative example, in which:

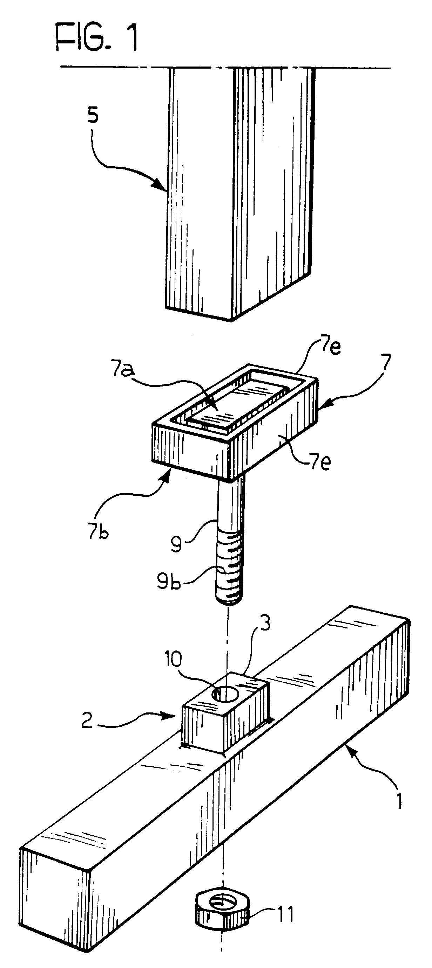

Figure 1 is a schematic perspective view of a pair of elements to be connected together by the method forming the subject of the invention; and

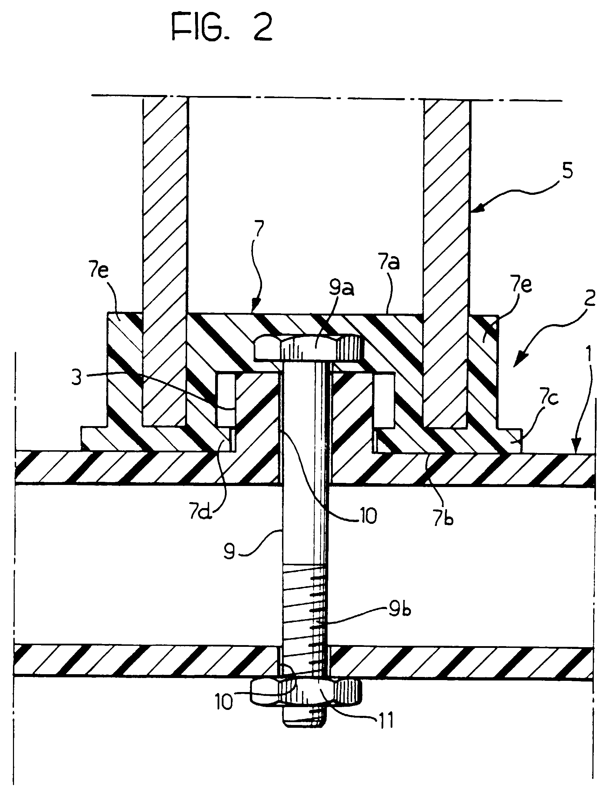

Figure 2 is a sectional side view of the elements of Figure 1 once connection has taken place.

With reference to the drawings, the reference numerals 1 and 5 respectively indicate a pair of elongate elements to be connected together in such a way that their axes intersect with one another at a node 2 of a structure, for example a frame of a vehicle.

In the case illustrated both the elements 1 and 5 are box-section elements and, for example, the element 1 may be made of composite plastics material such as glass fibre embedded in a matrix of thermosetting resin, whilst the element 5 may be an aluminium alloy section.

In the region intended to be joined to the element 5 the element 1 has a projection 3 the shape of which substantially corresponds to a cavity defined by the end of the element 5 but of smaller dimensions. The projection 3 can have the shape of a parallelepiped as illustrated in the drawings, or else, if the element 1 is a section obtained following an extrusion process, the projection 3 will be formed in the shape of a rib which extends longitudinally along the element 1 and parallel to its axis; in this case the end of the element 5 to be disposed adjacent the element 1 will be provided with suitable seats for receiving this rib.

Between the element 1 and the element 5 is interposed a connection member 7 of plastics material which has faces 7a and 7b which are substantially opposite one another, each of which is shaped in a manner complementary to the respective portions of the elements 5 and 1 to be connected. In particular, the face 7a will have hollow seats for receiving the end of the box section element 5 and the face 7b will have flat surfaces adapted to be disposed on the outer surface of the element 1 and a cavity the shape of which corresponds to the projection 3.

Conveniently, the member 7 has projections which make it possible to define contact surfaces with the elements 1 and 5 of greater area than the directly facing contact surfaces of the elements themselves and which would be usable as the adhered surfaces if the intermediate member 7 were not present. These projections can for example be constituted by external prolongations 7c and internal extensions 7d of the face 7b which faces towards the element 1 and/or side walls 7e directly perpendicular to the prolongations 7c and 7e and parallel to the outer surfaces of the element 5, which allow the end portion of the section 5 to be surrounded.

Thanks to the presence of the member 7 the elements 1 and 5 are completely separated from one another by a thin wall which is interposed between these two elements in such a way that the adhesion takes place exclusively between the element 1 and the element 7, and between the element 7 and the element 5.

The plastics material constituting the element 7 will be chosen in dependence on the materials of which the elements 1 and 5 are made, in such a way as to optimise the connection strength taking into account the adhesive material utilised.

Experimental tests conducted by the Applicant have made it possible to verify that the most suitable materials for the production of the member 7 are nylon, PET, and PBT filled with glass in a percentage variable between about 50 and 60%.

In the case of adhesive material constituted by polyurethane or epoxy resins it has been determined that nylon 6/6 is particularly suitable for the production of the member 7, this material also called polyhexamethylenedipamide having the following known chemical structure:

-[-NH-(CH₂)₆NH-CO-(CH₂)₄-CO-]ₙ-

The nylon 6/6 utilised is preferably filled with glass to 50% utilising E glass fibres (aluminoborosilicate glass) with diameter between 9 and 13 µm with a length between 0.3 - 0.4 mm and 10 mm.

In order to further increase the connection strength the member 7 may incorporate an auxiliary mechanical connection device for connection to one of the elements to be connected, for example the element 1.

In the embodiment illustrated in the drawings this auxiliary device is formed by a rod 9 having a head 9a embedded in the member 7 and a threaded end portion 9b opposite the head 9a. The rod 9 is fitted through a pair of aligned through holes 10 formed in the element 1 transversely of its axis in correspondence with the projection 3, and the free end 9b projecting from the element 1 is locked by a nut 11.

If the intermediate member 7 is obtained by moulding the rod 9 can be introduced into it when the material from which it is made is in the molten state. Alternatively the rod 9 can be coupled to the member 7 during connection of the member 7 to the element 1.

To achieve adhesive connection between the elements 1 and 5 the adhesive material is interposed between the element 5 and the member 7 and between the member 7 and the element 1 and then the member 7 and the element 1 are engaged together and the element 5 and the member 7 are engaged together and the assembly is subjected to a polymerisation process, for example at a temperature between 60 and 100°C for about 15 to 30 minutes if an adhesive of polyurethane type is used, or between 120 and 170°C for about 30 minutes if an epoxy adhesive is used.

As an example the composition of a structural two-part polyurethane adhesive composed of a resin A and a resin B is set out below, which can be used to connect the two elements 1 and 5 with the interposition of the intermediate member 7. This adhesive is particularly suitable for automatic dispensing.

The resin A has a viscosity of 200,000/210,000mPas and a specific gravity of 1.5 ± 0.05 g/ml and comprises the following components in percentages by weight:

| | |
|---|---|
| glycols | 52% |
| calcium carbonate | 38% |
| amorphous silica | 0.2% |
| aliphatic amines | 0.8% |
| zeolite (silicates) | 6% |
| titanium oxide | 3% |

The resin B has a viscosity of about 110,000/120,000 mPas and a specific gravity of 1.8±0.05 g/ml, the components of which expressed in percentages by weight are:

| | |
|---|---|
| aromatic isocynates of MDI | 28% |
| aluminium silicate | 17% |
| calcium carbonate | 49% |
| phthalic plastifier | 6% |

The ratio of the mixture of the resins A and B is:
- by weight 100/130
- by volume 100/100

The post-life of the adhesive is 7/10 minutes with a slip ≤ 2.5mm and a shear separation strength after a cycle of 10 minutes at 80°C and 7 days at T.A. SMC/SMC free of dust, of 55 daN/cm².

## Claims

1. A method for the adhesive connection of elements in a structure the axes of which intersect with one another, comprising the following operations:
- arranging a first element (1) and a second element (5) to be connected together, in which at least one of these elements (5) is a box section element,
- arranging an intermediate connection member (7) of plastics material (1, 5) having respective seats each of which has a shape complementary to a connecting portion of one of the said elements (1, 5) to be connected,
- interposing an adhesive material between the intermediate member (7) and the elements (1, 5) to be connected,
- bringing said elements (1, 5) together with the intermediate member (7) interposed between them in such a way that the elements (1, 5) engage the seats defined by the intermediate member (7), and holding them together until polymerisation of the adhesive material is achieved,
characterised in that the connecting portions of said elements (1, 5) are coupled with the intermediate member (7) by inserting them into hollow seats provided in corresponding substantially opposite faces (7a, 7b) of the intermediate member (7) until the connecting portions abut against base walls of the hollow seats, so that the connecting portions of said elements (1, 5) are surrounded by the intermediate member (7) and are separated from each other by a thin wall of the intermediate member.

2. A method according to Claim 1, characterised in that one of the two elements (1, 5) is provided with a projection (3) and one of the seats in the intermediate member (7) is shaped in such a way as to receive at least a portion of the said projection (3).

3. A method according to Claim 1 or Claim 2, characterised in that the intermediate connection member (7) includes an auxiliary mechanical connection device (9, 11) for connection to one of the said elements (1, 5).

4. A method according to Claim 3, characterised in that the auxiliary mechanical connection device is a rod (9) incorporated in the intermediate member (7), which can engage a corresponding hole (10) formed in one of the two elements (1, 5), this rod (9) having a threaded end (9b) which can be engaged by a clamping nut (11).

5. A method according to any of the preceding Claims 1 to 4, characterised in that the intermediate connection member (7) is shaped in such a way as to define contact surfaces with the said elements (1, 5) which are larger than the mutual facing contact surfaces of the elements (1, 5) themselves.

6. A connection member of plastic material for use in the adhesive connection of elements of a structure, said member (7) having at least two hollow seats provided in its substantially opposite faces (7a, 7b) and outwardly delimited by side walls, the seats being adapted to receiving respective connecting portions of elements (1, 5) to be connected by means of the connection member with adhesive material,
characterised in that it has an integral structure defining both the seats and a wall interposed between the seats for separating them from each other, and an auxiliary mechanical connection device (9, 11) adapted to be connected to one of said elements (1, 5), said device extending outwardly of one of the seats from an end portion embedded in the base of the seat.

7. A connection member according to Claim 6, characterised in that it is made of glass-filled nylon 6/6.

8. A connection member according to any of Claims 6 or 7, characterised in that it is shaped in such a way as to define contact surfaces with the said elements (1, 5) which are larger in area than the mutually facing contact surfaces of the element (1, 5) themselves.

9. A connection member according to any of Claims 6 to 8, characterised in that the auxiliary mechanical connection device is a rod (9) which can engage a corresponding hole (10) formed in one of the two elements (1, 5), this rod (9) having a threaded end (9b) engageable by a locking nut (11).

10. A structure comprising at least two elongated structural elements of which at least one element is a box-section element, the elements being connected to each other so that their axes intersect with one another, and an intermediate connection member (7) of plastics material interposed between said elements (1, 5), the intermediate member (7) having seats the shape of each of which is complementary to a corresponding connecting portion of a respective element (1, 5), said seats receiving said connecting portions and an adhesive material,
characterised in that said seats are hollow seats provided in corresponding substantially opposite faces (7a, 7b) of the connection member (7), the seats receiving the connecting portions in abutment with the base walls of the hollow seats, the walls of the hollow seats surrounding a corresponding connecting portion of a respective element (1, 5) so that the connecting portions are separated from each other by a thin wall of the connection member (7).

## Patentansprüche

1. Verfahren zur klebenden Verbindung von Elementen in einer Struktur, deren Achsen einander schneiden, umfassend die folgenden Arbeitsschritte:
- Anordnen eines ersten Elements (1) und eines zweiten Elements (5) zur Verbindung miteinander, wobei mindestens eines dieser Elemente (5) ein Kastenprofilelement ist,
- Anordnen eines Verbindungszwischenglieds (7) aus Kunststoff (1, 5) mit entsprechenden Sitzen, von denen jeder eine zu einem Verbindungsabsschnitt eines der zu verbindenden Elemente (1, 5) komplementäre Gestalt aufweist,
- Anbringen eines Klebstoffs zwischen dem Zwischenglied (7) und den zu verbindenden Elementen (1, 5),
- Zusammenbringen der Elemente (1, 5) mit dem dazwischen angeordneten Zwischenglied (7) in einer Weise, dass die Elemente (1, 5) in die durch das Zwischenglied (7) definierten Sitze eingreifen, und Zusammenhalten derselben bis zur Polymerisation des Klebstoffs,
dadurch gekennzeichnet, dass die Verbindungsabschnitte der Elemente (1, 5) mit dem Zwischenglied (7) gekoppelt werden, indem sie in in entsprechenden, im wesentlichen entgegengesetzten Seiten (7a, 7b) des Zwischenglieds (7) vorgesehene hohle Sitze eingeschoben werden bis die Verbindungsabschnitte gegen Basiswände der hohlen Sitze stoßen, sodass die Verbindungsabschnitte der Elemente (1, 5) vom Zwischenglied (7) umgeben und durch eine dünne Wand des Zwischenglieds voneinander getrennt werden.

2. Verfahren nach Anspruch 1, dadurch gekennzeichnet, dass eines der beiden Elemente (1, 5) mit einem Vorsprung (3) versehen ist und einer der Sitze im Zwischenglied (7) derart gestaltet ist, dass er zumindest einen Teil dieses Vorsprungs (3) aufnimmt.

3. Verfahren nach Anspruch 1 oder 2, dadurch gekennzeichnet, dass das Verbindungszwischenglied (7) eine zusätzliche mechanische Verbindungseinrichtung (9, 11) zur Verbindung mit einem der Elemente (1, 5) aufweist.

4. Verfahren nach Anspruch 3, dadurch gekennzeichnet, dass die zusätzliche mechanische Verbindungseinrichtung eine Stange (9) ist, die im Zwischenglied (7) inkorporiert ist und in ein entsprechendes in einem der beiden Elemente (1, 5) ausgebildetes Loch (10) eingreifen kann, wobei die Stange (9) ein mit Gewinde versehenes Ende (9b) aufweist, das von einer Klemmmutter (11) umgriffen werden kann,.

5. Verfahren nach einem der vorhergehenden Ansprüche 1 bis 4, dadurch gekennzeichnet, dass das Verbindungszwischenglied (7) derart gestaltet ist, dass es Kontaktflächen mit den Elementen (1,5) definiert, die größer als die einander zugewandten Kontaktflächen der Elemente (1, 5) selbst sind.

6. Verbindungsglied aus Kunststoff zur Verwendung bei der Klebeverbindung von Elementen einer Struktur, welches Glied (7) mindestens zwei hohle Sitze aufweist, die in seinen im wesentlichen entgegengesetzten Seiten (7a, 7b) vorgesehen und durch Seitenwände nach außen hin begrenzt sind, wobei die Sitze derart gestaltet sind, dass sie entsprechende Verbindungsabschnitte von mittels des Verbindungsglieds mit Klebstoff miteinander zu verbindenden Elementen (1, 5) aufnehmen, dadurch gekennzeichnet, dass es eine integrale Struktur, die sowohl die Sitze als auch eine zwischen den Sitzen zum Trennen derselben voneinander angeordnete Wand definiert, und eine zusätzliche mechanische Verbindungseinrichtung (9, 11) aufweist, die mit einem der Elemente (1, 5) verbindbar ist, wobei sich die Einrichtung, ausgehend von einem in der Basis des Sitzes eingebetteten Endabschnitt, von einem der Sitze nach außen erstreckt.

7. Verbindungsglied nach Anspruch 6, dadurch gekennzeichnet, dass es aus mit Glas verstärktem Nylon 6/6 hergestellt ist.

8. Verbindungsglied nach einem der Ansprüche 6 oder 7, dadurch gekennzeichnet, dass es derart gestaltet ist, dass es Kontaktflächen mit den Elementen (1, 5) definiert, die flächenmäßig größer sind als die einander zugewandten Kontaktflächen der Elemente (1, 5) selbst.

9. Verbindungsglied nach einem der Ansprüche 6 bis 8, dadurch gekennzeichnet, dass die zusätzliche mechanische Verbindungseinrichtung eine Stange (9) ist, die in einem entsprechenden in einem der beiden Elemente (1, 5) ausgebildeten Loch (10) eingreifen kann, wobei diese Stange (9) ein mit Gewinde versehenes Ende (9b) aufweist, das von einer Blockiermutter (11) übergriffen werden kann.

10. Struktur umfassend mindestens zwei längliche Bauelemente, von denen mindestens ein Element ein Kastenprofilelement ist, wobei die Elemente derart miteinander verbunden sind, dass ihre Achse einander schneiden, und ein zwischen den Elementen (1, 5) angeordnetes Verbindungszwischenglied (7) aus Kunststoff, welches Zwischenglied (7) Sitze aufweist, deren Gestalt jeweils komplementär zu einem entsprechenden Verbindungsabschnitt des jeweiligen Elements (1, 5) ist, wobei die Sitze die Verbindungsabschnitte und einen Klebstoff aufnehmen, dadurch gekennzeichnet, dass die Sitze hohle Sitze sind, die in entsprechenden, im wesentlichen entgegengesetzten Seiten (7a, 7b) des Verbindungsglieds (7) vorgesehen sind, welche Sitze die Verbindungsabschnitte in Anlage an den Basiswänden der hohlen Sitze aufnehmen, wobei die Wände der hohlen Sitze einen entsprechenden Verbindungsabschnitt des jeweiligen Elements (1, 5) umgeben, sodass die Verbindungsabschnitte durch eine dünne Wand des Verbindungsglieds (7) voneinander getrennt sind.

## Revendications

1. Procédé pour le raccordement par adhésif d'éléments dans une structure dont les axes se coupent l'un l'autre, comportant les opérations suivantes:
- disposer un premier élément (1) et un deuxième élément (5) devant être reliés ensemble, dans lequel au moins un de ces éléments (5) est un élément à section en boîte,
- disposer un élément de raccordement intermédiaire (7) en matière plastique (1, 5) ayant des sièges respectifs chacun d'une forme complémentaire à une partie de raccordement d'un desdits éléments (1, 5) devant être reliés,
- interposer une matière adhésive entre l'élément intermédiaire (7) et les éléments (1, 5) devant être reliés,
- amener lesdits éléments (1, 5) ensemble avec l'élément intermédiaire (7) interposé entre eux d'une manière telle que les éléments (1, 5) engagent les sièges définis par l'élément intermédiaire (7), et les maintenir ensemble jusqu'à ce que la polymérisation de la matière adhésive soit obtenue,
caractérisé en ce que les parties de raccordement desdits éléments (1, 5) sont reliées à l'élément intermédiaire (7) en les insérant dans des sièges creux prévus dans des faces sensiblement opposées (7a, 7b) de l'élément intermédiaire (7) jusqu'à ce que les parties de raccordement butent contre des parois de base des sièges creux, de sorte que les parties de raccordement desdits éléments (1, 5) sont entourées par l'élément intermédiaire (7) et sont séparées l'une de l'autre par une paroi mince de l'élément intermédiaire.

2. Procédé selon la revendication 1, caractérisé en ce que l'un des deux éléments (1, 5) est pourvu d'une saillie (3) et un des sièges dans l'élément intermédiaire (7) est conformé de manière à recevoir au moins une partie de ladite saillie (3).

3. Procédé selon la revendication 1 ou 2, caractérisé en ce que l'élément de raccordement intermédiaire (7) comprend un dispositif de raccordement mécanique auxiliaire (9, 11) pour raccordement à l'un des éléments (1, 5).

4. Procédé selon la revendication 3, caractérisé en ce que le dispositif de raccordement mécanique auxiliaire est une tige (9) incorporée dans l'élément intermédiaire (7), qui peut engager un trou (10) correspondant formé dans un des deux éléments (1, 5), cette tige (9) ayant une extrémité filetée (9b) qui peut être engagée avec un écrou de serrage (11).

5. Procédé selon l'une quelconque des revendications 1 à 4, caractérisé en ce que l'élément de raccordement intermédiaire (7) est conformé de manière à définir des surfaces de contact avec lesdits éléments (1, 5) qui sont plus grandes que les surfaces de contact mutuellement en regard des éléments (1, 5) eux-mêmes.

6. Elément de raccordement en matière plastique pour utilisation dans le raccordement par adhésif d'éléments d'une structure, ledit élément (7) ayant au moins deux sièges creux prévus dans ses faces sensiblement opposées (7a, 7b) et délimités extérieurement par des parois latérales, les sièges étant prévus pour recevoir des parties de raccordement respectives des éléments (1, 5) devant être reliés au moyen de l'élément de raccordement avec une matière adhésive, caractérisé en ce qu'il possède une structure intégrale définissant à la fois les sièges et une paroi interposée entre les sièges de façon à les séparer l'un de l'autre, et un dispositif de raccordement mécanique auxiliaire (9, 11) prévu pour être relié à l'un des éléments (1, 5), ledit dispositif s'étendant vers l'extérieur de l'un des sièges depuis une partie d'extrémité noyée dans la base du siège,

7. Elément de raccordement selon la revendication 6, caractérisé en ce qu'il est fabriqué en Nylon 6/6 chargé de verre.

8. Elément de raccordement selon l'une quelconque des revendications 6 ou 7, caractérisé en ce qu'il est conformé de manière à définir des surfaces de contact avec lesdits éléments (1, 5) qui sont d'une section plus grande que les surfaces de contact mutuellement en regard des éléments (1, 5) eux-mêmes.

9. Elément de raccordement selon l'une quelconque des revendications 6 à 8, caractérisé en ce que le dispositif de raccordement mécanique auxiliaire est une tige (9) qui peut engager un trou correspondant (10) formé dans un des deux éléments (1, 5), cette tige (9) ayant une extrémité filetée (9b) pouvant être engagée par un écrou de blocage (11).

10. Structure comportant au moins deux éléments structurels allongés dont au moins un élément est un élément à section en boîte, les éléments étant reliés l'un à l'autre de telle sorte que leurs axes se coupent, et un élément de raccordement intermédiaire (7) en matière plastique interposé entre lesdits éléments (1, 5), l'élément intermédiaire (7) ayant des sièges dont la forme est complémentaire à une partie de raccordement correspondante d'un élément (1, 5) respectif, lesdits sièges recevant lesdites parties de raccordement et une matière adhésive,
caractérisée en ce que lesdits sièges sont des sièges creux prévus dans des faces sensiblement opposées correspondantes (7a, 7b) de l'élément de raccordement (7), les sièges recevant les parties de raccordement en butée avec les parois de base des sièges creux, les parois des sièges creux entourant une partie de raccordement correspondante d'un élément respectif (1, 5) de telle sorte que les parties de raccordement sont séparées l'une de l'autre par une paroi mince de l'élément de raccordement (7) .
